# EUROPÄISCHE PATENTSCHRIFT

(11) **EP 1 470 398 B1**
(45) Veröffentlichungstag und Bekanntmachung des Hinweises auf die Patenterteilung: **17.05.2006**
(21) Anmeldenummer: 03704401.3
(22) Anmeldetag: 15.01.2003
(51) Int. Cl.: G01G 23/00, G01G 19/414

(54) **KRAFTAUFNEHMER**
FORCE SENSOR
CAPTEUR DE FORCE

(30) Priorität: 21.01.2002 DE 10202401
(43) Veröffentlichungstag der Anmeldung: 27.10.2004
(73) Patentinhaber: SARTORIUS AG, 37075 Göttingen (DE)
(72) Erfinder: SCHULZE, Werner, 37083 Göttingen (DE); WALD, Michael, 31137 Hildesheim (DE)
(86) Internationale Anmeldenummer: PCT/EP2003/000332
(87) Internationale Veröffentlichungsnummer: WO 2003/060440

(56) Entgegenhaltungen:
- WO-A-02/08705
- US-A- 4 899 599
- US-A- 6 002 090

## Beschreibung

Die Erfindung bezieht sich auf einen Kraftaufnehmer mit zwei Krafteinleitungselementen, an denen die zu messende Kraft und die Abstützkraft eingeleitet werden, wobei die beiden Krafteinleitungselemente rotationssymmetrisch ausgebildet sind und in axialer Richtung beabstandet sind und wobei die zu messende Kraft und die Abstützkraft in radialer Richtung eingeleitet werden, und mit einem Federelement, das in axialer Richtung zwischen den beiden Krafteinleitungselementen angeordnet ist und diese verbindet und dessen belastungsabhängige Deformation in ein elektrisches Signal umgewandelt wird, und mit einer rohrförmigen Abdeckung, die mit einem der beiden Krafteinleitungselemente verbunden ist und das Federelement umgibt.

Kraftaufnehmer dieser Art sind z. B. aus der US 6 002 090 bekannt.

Nachteilig an diesem bekannten Kraftaufnehmer ist, dass keinerlei Schutzmaßnahmen gegen zu große einwirkende Kräfte vorhanden sind. Zu große Kräfte führen dadurch zur Zerstörung des Kraftaufnehmers. Weiterhin kann bei sehr großer Überlast das Federelement ganz abscheren bzw. abreißen, sodass der Kraftaufnehmer keine mechanische Verbindung zwischen den angeschraubten Krafteinleitungsteilen mehr herstellt. Ist z. B. in einem Pkw ein Sitz über vier Kraftaufnehmer mit dem Chassis verbunden, um die Gewichtsbelastung des Sitzes zu messen, so würde ein Abscheren der vier Federelemente bei einem Crash dazu führen, dass der Sitz keine Verbindung mehr zum Chassis hätte. Dies muss jedoch unter möglichst allen Umständen vermieden werden. Unter Überlastsicherung soll im Folgenden also sowohl der Schutz des Kraftaufnehmers selbst bei relativ geringen Überbelastungen als auch ein Schutz der über den Kraftaufnehmer befestigten Gegenstände gegen Herausreißen bei großen Überbelastungen verstanden werden. Ein Überlastschutz dieser Art muss beim Kraftaufnehmer gemäß dem Stand der Technik außerhalb des Kraftaufnehmers durch entsprechende Auslegung der Einbauumgebung erzeugt werden, was häufig schwierig ist.

Aufgabe der Erfindung ist es daher, einen Kraftaufnehmer der eingangs genannten Art anzugeben, der eine integrierte Überlastsicherung aufweist.

Erfindungsgemäß wird dies dadurch erreicht, dass die Abdeckung auch einen Teil des anderen Krafteinleitungselementes unter Bildung eines umlaufenden Spaltes umgibt, dass die Abdeckung eine nach innen überkragende Einschnürung aufweist, die in geringem axialen Abstand einer Schulter am anderen Krafteinleitungselement gegenübersteht, sodass sowohl bei radialer Überlast als auch bei axialer Überlast das andere Krafteinleitungselement nach geringer Auslenkung an einem Teil der Abdeckung anliegt, und dass die Abdeckung die Überlastkräfte von einem Krafteinleitungselement ohne nennenswerte Verbiegung zum anderen Krafteinleitungselement weiterleitet und damit um das Federelement herum ableitet.

Die in der US 6 002 090 als Schutz gegen Umgebungseinflüsse vorgesehene rohrförmige Abdeckung um das Federelement herum wird also zum einen so verlängert und mit einer überkragenden Einschnürung versehen, dass sie sowohl in radialer als auch in axialer Richtung als Anschlag bei zu weiter Auslenkung des Federelementes wirkt, zum anderen wird die rohrförmige Abdeckung so verstärkt, dass sie im Überlastfall die überschüssigen Kräfte aufnehmen kann und am Federelement vorbei weiterleiten kann.

Vorteilhafte Ausgestaltungen ergeben sich aus den Unteransprüchen.
Die Erfindung wird im Folgenden anhand der schematischen Figuren beschrieben. Dabei zeigt:

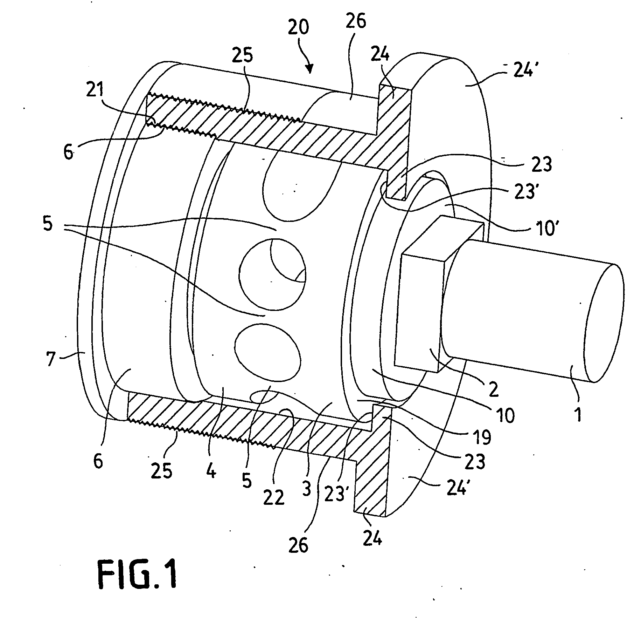

- Figur 1: eine perspektivische Ansicht des Kraftaufnehmers mit z. T. weggebrochener Abdeckhülse,
- Figur 2: eine Seitenansicht des Kraftaufnehmers ohne Abdeckung und
- Figur 3: die Abdeckhülse allein in Seitenansicht.

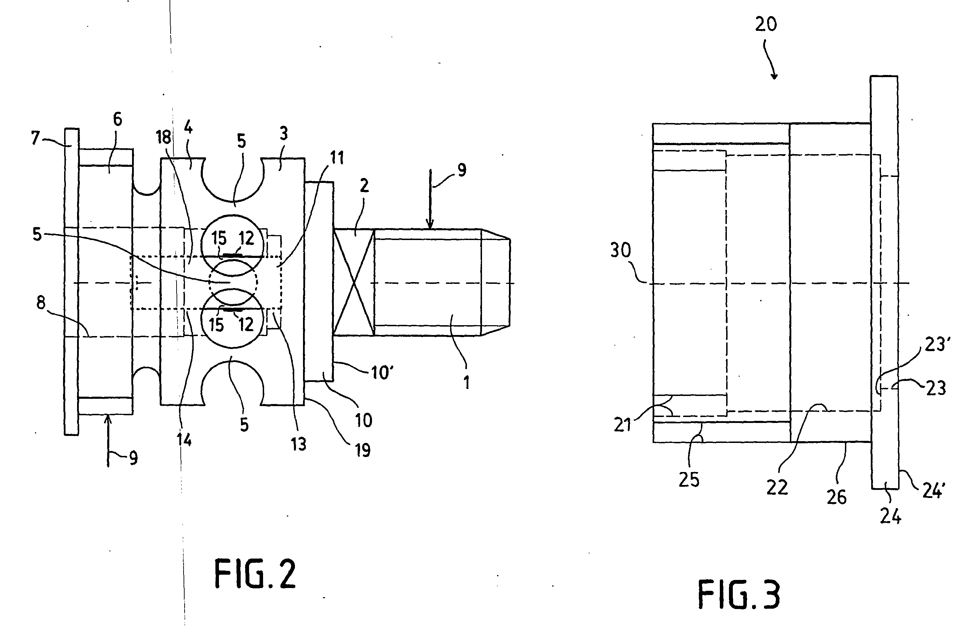

Den eigentlichen Kraftaufnehmer ohne die Überlastsicherung erkennt man am besten in der Seitensicht in Figur 2: Als Krafteinleitungselement für die zu messenden Kräfte (Kraftpfeile 9) dient einmal ein Gewindebolzen 1 und andererseits ein Flansch 7 mit einem anschließenden Gewindebund 6 und einem stabilen Bereich 4, durch die ein Sackloch 8 hindurchgeht. Der Gewindebolzen 1 weist an seinem Ursprung einen Vierkant 2 auf zur Ausrichtung des Kraftaufnehmers relativ zur Messkraft, anschließend einen scheibenförmigen Bereich 10 und geht dann in einen stabilen Bereich 3 über. Zwischen den beiden Krafteinleitungselementen 1/2/10/3 und 4/6/7 befindet sich das Federelement, das in zwei Teile aufgeteilt ist: Einmal ein äußeres Federelement 5 und zum anderen ein inneres Federelement 15. Die stabilen Enden 11 und 18 des inneren Federelementes 15 sind im Bereich 13 und im Bereich 14 mit den äußeren Bereichen 3 und 4 verbunden (z. B. durch Schweißen, Kleben, Einschrumpfen oder dergleichen). Unter der Einwirkung der zu messenden Kraft verbiegt sich also sowohl das äußere Federelement 5 als auch das innere Federelement 15. Die Verbiegung des inneren Federelementes 15 wird dabei durch Dehnungsmessstreifen 12 in ein elektrisches Signal umgewandelt. Die Applikation von Dehnungsmessstreifen und die Auswertung ihrer Widerstandsänderung in einer Wheatstoneschen Brücke ist allgemein bekannt und z. B. auch in der schon zitierten US 6 002 090 beschrieben, sodass sie hier nicht erläutert werden muss.

Die Überlastsicherung wird nun durch eine aufgeschraubte Abdeckhülse 20 erreicht, wie sie in Figur 3 in Seitenansicht allein dargestellt ist und wie sie auch in der perspektivischen Gesamtansicht des Kraftaufnehmers z. T. weggebrochen erkennbar ist. Die Abdeckhülse ist rotationssymmetrisch ausgebildet mit der Symmetrieachse 30. Der innere Hohlraum 22 der Abdeckhülse weist an seinem in den Figuren linken Ende ein Innengewinde 21 auf, das auf den Gewindebund 6 aufgeschraubt wird. Die Abdeckhülse 20 ist dadurch fest mit dem Krafteinleitungselement 6/7 verbunden. Der Durchmesser des inneren Hohlraums 22 der Abdeckhülse ist nun so bemessen, dass er 0,4 bis 1,0 mm größer ist als der äußere Durchmesser der stabilen Bereiche 3 und 4. Zwischen den stabilen Bereichen 3/4 und der Abdeckhülse 20 verbleibt also ein umlaufender Spalt von 0,2 bis 0,5 mm. Ist die zu messende Kraft so groß, dass das äußere Federelement und das innere Federelement mehr als 0,2 bis 0,5 mm ausgelenkt würden, so legt sich der Bereich 3 an die Innenwand 22 der Abdeckhülse an und der Bereich 10 an die Innenwand der Einschnürung 23. Damit wird die Auslenkung auf etwa diesen Betrag begrenzt. Die Abdeckhülse 20 ist nämlich so stabil dimensioniert, dass sie die Überlastkräfte vom Gewindebolzen 1 ohne nennenswerte Verbiegung auf den Flansch 7 weiterleitet und damit um die Federelemente 5 und 15 herum ableitet. - Diese Überlastsicherung für Kräfte in der Messrichtung (Kraftpfeile 9) wirkt in gleicher Weise für dazu senkrechte Kräfte - in Figur 2 also senkrecht zur Zeichenebene.

Auch für axiale Kräfte - also in der Richtung rechts/links in den Figuren - ist ein Überlastschutz realisiert. Dazu weist die Abdeckhülse 20 eine nach innen überkragende Einschnürung 23 auf. Diese Einschnürung fluchtet mit dem Bereich 10, sodass die Schulter 23' an der Einschnürung 23 der Schulter 19 mit geringem axialen Abstand als Überlastschutz gegen zu große axiale Kräfte nach rechts gegenübersteht. Gegen zu große axiale Kräfte nach links lässt sich ein Überlastschutz leicht extern realisieren, indem die Krafteinleitung am Krafteinleitungselement 1 so gestaltet wird, dass sie bei Überlast an der Seitenfläche 24' des Flansches 24 an der Abdeckhülse anliegt.

Die Abdeckhülse 20 hat neben ihrer Funktion als Überlastsicherung den weiteren Vorteil, dass sie als mit dem Krafteinleitungselement 6/7 stabil verbundenes Teil die Einleitung der zu messenden Kraft/Abstützkraft nicht nur am Krafteinleitungselement 6/7, sondern an einem beliebigen Bereich der Abdeckhülse 20 erlaubt. Das kann z. B. am Außengewinde 25 sein oder am gewindefreien Bereich 26 oder am Flansch 24. Beispielsweise kann eine Krafteinleitungsstange mit einem Loch den gewindefreien Bereich 26 umfassen und zwischen dem Flansch 24 und einer Mutter auf dem Gewindebereich 25 gefangen sein. Dies kann je nach Erfordernis so erfolgen, dass die Krafteinleitungsstange auf der Abdeckhülse entweder fest fixiert ist oder nur drehbar gefangen ist. Die Krafteinleitung am oder in der Nähe des Flansches 24 hat den Vorteil, dass der seitliche Versatz von Kraft und Abstützkraft (Kräftepfeile 9 in Figur 2) gering bleibt und damit auch das in den Kraftaufnehmer eingeleitete Moment.

Zum Schutz des Inneren des Kraftaufnehmers gegen Schmutz, Staub oder Wasser kann z. B. zwischen der Vorderfläche 24' des Flansches 24 und der Vorderfläche 10' des Bereiches 10 eine elastische Folie angeklebt sein, die so weich ist, dass sie praktisch keinen Kraftnebenschluss darstellt.

## Patentansprüche

1. Kraftaufnehmer mit zwei Krafteinleitungselementen (1, 6/7), an denen die zu messende Kraft und die Abstützkraft eingeleitet werden, wobei die beiden Krafteinleitungselemente rotationssymmetrisch ausgebildet sind und in axialer Richtung beabstandet sind und wobei die zu messende Kraft und die Abstützkraft in radialer Richtung eingeleitet werden, und mit einem Federelement (5, 15), das in axialer Richtung zwischen den beiden Krafteinleitungselementen angeordnet ist und diese verbindet und dessen belastungsabhängige Deformation in ein elektrisches Signal umgewandelt wird, und mit einer rohrförmigen Abdeckung, die mit einem der beiden Krafteinleitungselemente verbunden ist und das Federelement umgibt, **dadurch gekennzeichnet, dass** die Abdeckung (20) auch einen Teil (3, 10) des anderen Krafteinleitungselementes unter Bildung eines umlaufenden Spaltes umgibt, dass die Abdeckung (20) eine nach innen überkragende Einschnürung (23) aufweist, die in geringem axialen Abstand einer Schulter (19) am anderen Krafteinleitungselement gegenübersteht, sodass sowohl bei radialer Überlast als auch bei axialer Überlast das andere Krafteinleitungselement nach geringer Auslenkung an einem Teil der Abdeckung (20) anliegt, und dass die Abdeckung (20) die Überlastkräfte von einem Krafteinleitungselement (6/7) ohne nennenswerte Verbiegung zum anderen Krafteinleitungselement (1) weiterleitet und damit um das Federelement (5,15) herum ableitet.

2. Kraftaufnehmer nach Anspruch 1, **dadurch gekennzeichnet, dass** die Abdeckung (20) als Abdeckhülse auf das eine Krafteinleitungselement (6/7) aufgeschraubt ist.

3. Kraftaufnehmer nach Anspruch 1, **dadurch gekennzeichnet, dass** die Krafteinleitung an der Abdeckung (20) erfolgt.

4. Kraftaufnehmer nach Anspruch 1, **dadurch gekennzeichnet**, das der umlaufende Spalt 0,2 - 0,5 mm breit ist.

## Claims

1. Force transducer with two force introducing elements (1, 6/7), at which the force to be measured and the supporting force are introduced, wherein the two force introducing elements are formed to be rotationally symmetrical and spaced apart in axial direction and wherein the force to be measured and the supporting force are introduced in radial direction, and with a spring element (5, 15), which is arranged in axial direction between the two force introducing elements and connects these and the load-dependent deformation of which is converted into an electrical signal, and with a tubular cover, which is connected with one of the two force introducing elements and surrounds the spring element, **characterised in that** the cover (20) also surrounds a part (3, 10) of the other force introducing element with formation of an encircling gap, that the cover (20) has an inwardly projecting constriction (23) disposed at a small axial spacing opposite a shoulder (19) at the other force introducing element so that the other force introducing element after a small deflection bears against a part of the cover (20) not only in the case of radial overload, but also in the case of axial overload, and that the cover (20) passes on the overload forces from one force introducing element (6/7) to the other force introducing element (1) without appreciable bending and thus diverts them around the spring element (5, 15).

2. Force transducer according to claim 1, **characterised in that** the cover (20) is screwed as a cover sleeve onto the one force introducing element (6/7).

3. Force transducer according to claim 1, **characterised in that** the force introduction takes place at the cover (20).

4. Force transducer according to claim 1, **characterised in that** the encircling gap is 0.2 to 0.5 millimetres in width.

## Revendications

1. Capteur de force avec deux éléments d'application de force (1, 6/7) sur lesquels sont appliquées la force à mesurer et la force d'appui, les deux éléments d'application de force étant à symétrie de rotation et étant espacés dans le sens axial et la force à mesurer et la force d'appui étant appliquées dans le sens radial, et avec un élément élastique (5, 15) qui est disposé dans le sens axial entre les deux éléments d'application de force et qui joint ces deux éléments et dont la déformation dépendante de la charge est transformée en un signal électrique, et avec un recouvrement tubulaire qui est rattaché à un des deux éléments d'application de force et qui enveloppe l'élément élastique, **caractérisé en ce que** le recouvrement (20) entoure également une partie (3, 10) de l'autre élément d'application de force en formant un interstice périphérique, **en ce que** le recouvrement (20) présente un rétrécissement (23) faisant saillie vers l'intérieur et qui fait face, à une faible distance axiale, à un épaulement (19) de l'autre élément d'application de force, si bien qu'en cas de surcharge radiale comme de surcharge axiale l'autre élément d'application de force prend appui sur une partie du recouvrement (20) après une petite déviation, et **en ce que** le recouvrement (20) transmet les forces de surcharge d'un élément d'application de force (6/7) à un autre élément d'application de force (1) sans déformation notable et les dissipe donc autour de l'élément élastique (5, 15).

2. Capteur de force selon la revendication 1, **caractérisé en ce que** le recouvrement (20) est vissé sur un élément d'application de force (6/7) comme un manchon de recouvrement.

3. Capteur de force selon la revendication 1, **caractérisé en ce que** l'application de force s'effectue sur le recouvrement (20).

4. Capteur de force selon la revendication 1, **caractérisé en ce que** l'interstice périphérique est d'une largeur de 0,2 à 0,5 mm.
